# FASCICULE DE BREVET EUROPEEN

(11) **EP 4 528 130 B1**
(45) Date de publication et mention de la délivrance du brevet: **22.07.2026**
(21) Numéro de dépôt: 24201490.0
(22) Date de dépôt: 19.09.2024
(51) Int. Cl.: F16H 63/34, F16H 63/48, F16H 61/36

(54) **SYSTÈME D'ACTIONNEMENT MANUEL À LIMITATION DE COUPLE**
HANDBETÄTIGTES BETÄTIGUNGSSYSTEM MIT DREHMOMENTBEGRENZUNG
MANUAL ACTUATION SYSTEM WITH TORQUE LIMITATION

(30) Priorité: 25.09.2023 FR 2310138
(43) Date de publication de la demande: 26.03.2025
(73) Titulaire: Renault s.a.s, 92100 Boulogne Billancourt (FR)
(72) Inventeur: BANU, Sorin, 062203 BUCAREST (RO); PREDA, Alexandru, 062203 BUCAREST (RO); TURUNC, Irfan, 16372 BURSA (TR)

(56) Documents cités:
- US-A1- 2005 011 299
- US-B2- 9 789 856

## Description

La présente invention concerne un système d'actionnement manuel à limitation de couple. Un tel système d'actionnement est préférentiellement placé dans un véhicule, et peut par exemple activer ou désactiver une fonction de parking dudit véhicule.

Afin de lever toute ambiguïté, le boitier d'actionnement et le boitier d'extrémité désignent le même objet.

Le principe d'un tel système repose sur le coulissement d'une tige creuse à l'intérieur d'un canal interne d'un boitier d'extrémité, ledit coulissement étant réalisé au moyen d'un écrou d'activation solidarisé audit boitier d'extrémité et à travers lequel passe la tige. L'écrou d'activation possède un canal interne fileté et est monté en rotation sur le boitier d'extrémité. Une surface externe de la tige creuse est filetée, si bien qu'une mise en rotation de l'écrou d'activation dans le sens des aiguilles d'une montre engendre une translation de la tige creuse dans le canal interne, et une mise en rotation dans un sens inverse des aiguilles d'une montre dudit écrou d'activation, engendre une translation en sens inverse de ladite tige creuse dans ledit canal interne. La tige creuse présente une première extrémité et une deuxième extrémité considérées le long d'un axe longitudinal de ladite tige, et possède un axe longitudinal qui est parallèle à l'axe longitudinal du canal interne du boitier d'extrémité dans lequel elle est logée. En mettant l'écrou d'activation en rotation, la tige creuse peut ainsi passer :
- d'une première position pour laquelle la première extrémité émerge faiblement de l'écrou d'activation vers l'extérieur du boitier d'extrémité, et la deuxième extrémité est positionnée à une grande profondeur dans le canal interne dudit boitier d'extrémité,
- à une deuxième position pour laquelle le première extrémité émerge de façon plus importante de l'écrou d'activation que dans la première position, vers l'extérieur du boitier d'extrémité, et la deuxième extrémité est positionnée à une plus faible profondeur dans le canal interne du boitier d'extrémité que dans la première position.

Un câble de transmission est solidarisé à la deuxième extrémité de la tige creuse, et se déplace avec la même amplitude que celle de la tige creuse lorsque l'écrou est mis en rotation et entraine un mouvement de translation de ladite tige creuse dans le canal interne du boitier d'extrémité. De façon plus précise, une première extrémité du câble est arrimée à la deuxième extrémité de la tige creuse, et une deuxième extrémité du câble est arrimée à une pièce d'actionnement. Lorsque le câble se déplace sous l'effet du déplacement de la tige creuse dans le canal interne du boitier d'extrémité, il déplace la pièce d'actionnement avec la même amplitude de déplacement qui va alors exercer une fonction particulière au sein du véhicule.

Or, un inconvénient de ce type de système d'actionnement est que lorsque l'écrou d'activation est mis en rotation par un utilisateur dans un sens permettant à la tige creuse d'atteindre la deuxième position, rien n'empêche cet utilisateur de poursuivre la rotation de l'écrou d'activation une fois que ladite tige creuse a atteint la deuxième position. Généralement, la manipulation de l'écrou d'activation s'effectue au moyen d'un outil pouvant par exemple être une pince, et il est facile d'entrevoir quel pourrait être le niveau d'endommagement du système d'actionnement lors d'une mise en rotation excessive de l'écrou d'activation au moyen de cet outil.

Il est connu du document US 9789856 B2 un système d'actionnement conformément au préambule de la revendication 1.

Il est également connu du document US 2005/01129 A1 un actionneur pour un dispositif de réglage lombaire, pouvant être connecté à et pour ajuster un dispositif, comprenant un boîtier ayant un passage longitudinal s'étendant entre des première et seconde extrémités et définissant une ouverture au niveau de ou adjacente à la seconde extrémité, et une broche supportée dans le boîtier et mobile longitudinalement dans le passage du boîtier. La broche a deux première et deuxième parties filetées opposées, espacées longitudinalement, respectivement plus proches des première et deuxième extrémités du boîtier. Un premier écrou fileté fixé par rapport au boîtier est vissé sur la première partie filetée.

L'objet de la présente invention diffère du système d'actionnement connu du document US 9789856 B2 et de l'actionneur connu du document US 2005/01129 A1 en ce que la tige présente un tronçon dont la surface externe est lisse sans aucun filetage, et en ce que le tronçon est placé le long de la tige de manière que la deuxième position de la tige est atteinte lorsque le tronçon est entièrement parvenu dans le canal interne fileté de l'écrou d'activation. Une fois que le tronçon lisse de la tige est placé à l'intérieur de l'écrou d'activation, une mise en rotation dudit écrou d'activation est sans effet sur la tige et ne provoque donc plus de mouvements de ladite tige. De cette manière, un utilisateur désireux de faire atteindre la deuxième position à la tige, ne risque pas de forcer sur l'écrou d'activation une fois que ladite tige a atteint ladite position, puisqu'à ce moment-là, l'écrou d'activation va se mettre à tourner dans le vide.

La solution technique de la présente invention représente une solution pour les problèmes des deux documents mentionnés et par conséquent on ne risque pas d'endommager ledit système d'actionnement.Un système d'actionnement selon l'invention fonctionne sur le même principe que celui qui est décrit dans les documents cités précédemment , mais qui s'affranchit du principal inconvénient mentionné ci-avant.

L'invention a pour objet un système d'actionnement comprenant un boitier d'extrémité possédant un canal interne traversant, un écrou d'activation comportant un canal interne fileté et une tige allongée comprenant une surface externe filetée, l'écrou d'activation étant placé à une première extrémité du canal interne traversant du boitier d'extrémité de sorte que l'axe de révolution de l'écrou d'activation et l'axe de révolution du canal interne traversant soient confondus, la tige allongée passant dans l'écrou d'activation et s'étendant dans le canal interne du boitier d'extrémité, la tige présentant une première extrémité et une deuxième extrémité à laquelle est fixé un câble d'actionnement, et une mise en rotation de l'écrou d'activation entraine un déplacement en translation de la tige le long du canal interne traversant permettant à ladite tige de passer :
- d'une première position pour laquelle la première extrémité émerge faiblement de l'écrou d'activation vers l'extérieur du boitier d'extrémité, et la deuxième extrémité est positionnée à une profondeur importante dans le canal interne dudit boitier d'extrémité,
- à une deuxième position pour laquelle la première extrémité émerge de l'écrou d'activation de façon plus importante que dans la première position, vers l'extérieur du boitier d'extrémité, et la deuxième extrémité est positionnée à une plus faible profondeur dans le canal interne du boitier d'extrémité que dans la première position.

Selon l'invention, la tige présente un tronçon dont la surface externe est lisse sans aucun filetage, ledit tronçon étant placé le long de la tige de manière que la deuxième position de ladite tige est atteinte lorsque ledit tronçon est entièrement parvenu dans le canal interne fileté de l'écrou d'activation.

L'originalité d'un système d'actionnement selon l'invention est que, une fois que la tige a atteint la deuxième position, la totalité du tronçon lisse se retrouve dans l'écrou de manière qu'il n'existe plus aucune interaction entre ledit écrou d'activation et ladite tige excepté un simple contact. Autrement dit, une fois que le tronçon lisse de la tige est placé à l'intérieur de l'écrou d'activation, une mise en rotation dudit écrou d'activation est sans aucun effet sur la tige et ne provoque donc plus de mouvements de ladite tige. De cette manière, un utilisateur désireux de faire atteindre la deuxième position à la tige, ne risque pas de forcer sur l'écrou d'activation une fois que ladite tige a atteint ladite position, puisqu'à ce moment-là, l'écrou d'activation va se mettre à tourner dans le vide. Cet utilisateur ne pourra donc pas forcer sur l'écrou d'activation et engendrer un endommagement dudit système d'actionnement. Préférentiellement, la tige est placée dans le canal interne du boitier d'extrémité de sorte que les axes longitudinaux de ladite tige et dudit canal soient parallèles. Le principe de fonctionnement d'un système d'actionnement selon l'invention est de provoquer un mouvement de translation de la tige dans le canal interne du boitier d'extrémité au moyen d'une mise en rotation de l'écrou d'activation afin de déplacer le câble d'actionnement avec la même amplitude que celle de la tige. En se déplaçant sous l'effet de la tige qui se translate, le câble va déplacer ou activer une pièce d'actionnement fixée au bout dudit câble, afin de remplir une fonction particulière. Le boitier d'extrémité constitue un boitier de commande à partir duquel le système d'actionnement est déclenché. Avantageusement, l'écrou d'activation doit être tourné dans le sens des aiguilles d'une montre pour faire passer la tige de la première position à la deuxième position, et dans le sens inverse des aiguilles d'une montre pour faire passer ladite tige de la deuxième position à la première position. Avantageusement, la tige et le canal interne du boitier d'extrémité sont deux éléments rectilignes.

Selon une caractéristique possible de l'invention, la longueur du tronçon lisse de la tige est supérieure ou égale à la longueur du canal interne fileté de l'écrou d'activation. En effet, si la longueur de ce tronçon lisse était inférieure à celle de l'écrou d'activation, une partie de la surface externe de la tige qui est filetée, serait en interaction avec le canal interne fileté dudit écrou d'activation, cette configuration sortant du cadre de la présente invention.

Selon une caractéristique possible de l'invention, la tige, le tronçon lisse et le canal interne fileté de l'écrou d'activation sont de forme cylindrique, le diamètre externe du tronçon lisse de la tige étant inférieur au diamètre du canal interne fileté de l'écrou d'activation de sorte qu'il se crée un jeu entre eux lorsque le tronçon lisse est complètement parvenu dans ledit canal interne fileté. De cette manière, lorsque le tronçon lisse de la tige est complètement inséré dans l'écrou d'activation, il se crée un jeu parfaitement détectable par l'utilisateur, indiquant que la deuxième position de la tige a été atteinte.

Selon une caractéristique possible de l'invention, la tige est creuse et la deuxième extrémité de ladite tige présente une première tubulure de dimension réduite reliant un espace interne de ladite tige à un espace extérieure de celle-ci, une première extrémité du câble d'actionnement présentant une tête élargie qui est plus large que ladite première tubulure, ledit câble d'actionnement étant fixé à la deuxième extrémité de la tige au moyen d'une insertion de la tête élargie dudit câble dans l'espace interne de ladite tige et d'un passage dudit câble dans ladite première tubulure. La fixation de la première extrémité du câble à la deuxième extrémité de la tige s'effectue au moyen d'une insertion d'une tête élargie dudit câble dans un espace interne de ladite tige, sans possibilité que ledit câble puisse être retiré facilement, puisque la tête élargie possède des dimensions qui sont supérieures à celles de la première tubulure. Avantageusement, l'espace extérieur de la tige est constitué par le canal interne du boitier d'extrémité.

Selon une caractéristique possible de l'invention, une deuxième extrémité du canal interne du boitier d'extrémité présente une deuxième tubulure ayant le même diamètre que celui de la première tubulure et se trouvant dans la parfaite continuité de ladite première tubulure, le câble émergeant du boitier d'extrémité en passant par ladite deuxième tubulure. Pour cette configuration, la tête élargie du câble est insérée dans l'espace interne de la tige, ledit câble passant par la première et par la deuxième tubulures avant de s'étendre vers l'extérieur du boitier d'extrémité.

Selon une caractéristique possible de l'invention, une deuxième extrémité du câble qui est extérieure au boitier d'extrémité, est associée à un élément de rappel précontraint, si bien que la tête élargie dudit câble demeure en butée contre une paroi interne délimitant la deuxième extrémité de la tige creuse. Cet élément de rappel précontraint, qui peut par exemple être un ressort, a tendance à maintenir la tête élargie du câble dans la deuxième extrémité de la tige, et lorsque ladite tige passe de la première position à la deuxième position, le déplacement de celle-ci s'effectue au prix d'un certain effort pour vaincre la force de rappel dudit ressort. De même, lorsque la tige a atteint la deuxième position correspondant à une insertion du segment lisse dans l'écrou d'activation, une mise en rotation de l'écrou de rotation pour permettre à la tige de parvenir à la première position s'effectue naturellement sous l'effet de l'effort de traction dudit ressort qui va permettre à la surface extérieure filetée de ladite tige de venir s'insérer dans le filetage du canal interne du boitier d'extrémité.

Selon une caractéristique possible de l'invention, la deuxième extrémité du câble est reliée à une pièce d'actionnement qui est mise en mouvement par le câble qui se déplace conjointement avec la tige dans le boitier d'extrémité.

Selon une caractéristique possible de l'invention, la première extrémité de la tige dispose d'une rondelle élargie qui est au contact de l'écrou d'activation lorsque la tige est dans la première position. Cette rondelle agit comme une butée d'arrêt, permettant à la tige se déplaçant pour atteindre la première position, de stopper sa course dès que ladite rondelle est en appui contre ledit écrou d'activation.

Selon une caractéristique possible de l'invention, le boitier d'extrémité comporte des moyens de fixation destinés à la fixation dudit boitier d'extrémité à un élément de structure extérieur. En effet, le boitier d'extrémité étant destiné à demeurer fixe, il dispose de moyens de fixation lui permettant d'être fixé à un grand éventail d'éléments de structure qui sont extérieurs audit boitier d'extrémité.

Selon une caractéristique possible de l'invention, ledit système d'actionnement sert à piloter la fonction parking du véhicule, de sorte que dans la première position, la tige active la fonction parking du véhicule et dans la deuxième position elle désactive cette fonction.

Un système d'actionnement selon l'invention présente l'avantage de posséder un fonctionnement sûr, fiable et répétitif, au moyen d'une modification structurelle simple et astucieuse de la tige, ladite modification étant facilement usinable. Il en résulte que cette modification structurelle est peu coûteuse. Il a de plus l'avantage d'être un peu plus léger, car la modification structurelle consiste à affiner localement la tige, ce qui correspond à un enlèvement de matière. Il présente enfin un encombrement constant par rapport aux systèmes d'actionnement existants.

On donne ci-après une description détaillée d'un mode de réalisation préféré d'un système d'actionnement selon l'invention, en se référant aux figures suivantes :
[Fig. 1] La figure 1 est une vue en perspective d'un système d'actionnement selon l'invention dans son environnement dans un véhicule,
[Fig. 2] La figure 2 est une vue en coupe d'un boitier d'extrémité d'un système d'actionnement selon l'invention, dans la première position,
[Fig. 3] La figure 3 est une vue en coupe d'un boitier d'extrémité d'un système d'actionnement selon l'invention, dans la deuxième position,
[Fig. 4] La figure 4 est une vue en perspective d'un boitier d'extrémité d'un système d'actionnement selon l'invention, dans la première position,
[Fig. 5] La figure 5 est une vue en perspective d'un boitier d'extrémité d'un système d'actionnement selon l'invention, dans la deuxième position,
[Fig. 6] La figure 6 est une de côté d'une pièce d'actionnement d'un système d'actionnement selon l'invention, dans deux positions différentes.

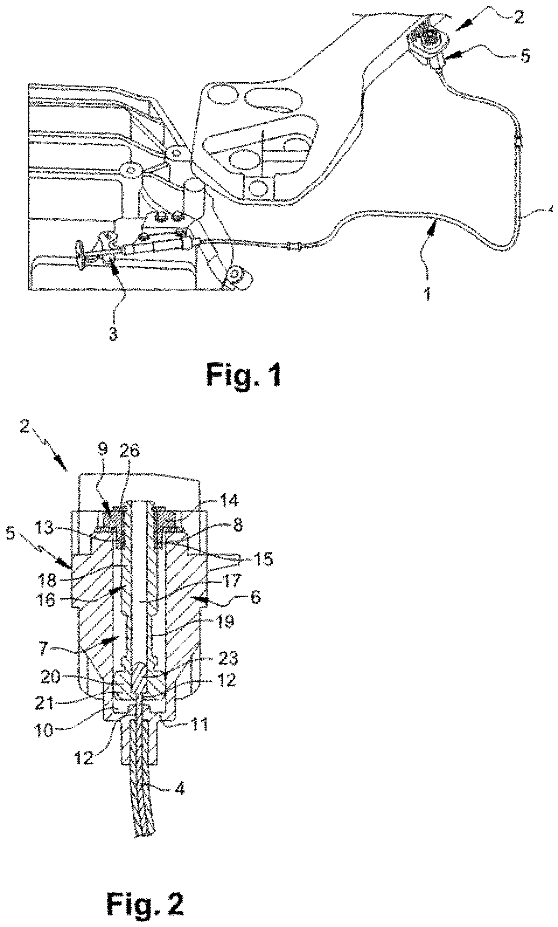

En se référant la figure 1, un système d'actionnement 1 selon l'invention, peut par exemple être placé dans un véhicule automobile pour activer une fonction parking dudit véhicule. Un tel système d'actionnement 1 comprend une partie amont 2 permettant de commander ledit système 1, et une partie aval 3 permettant de réaliser une fonction qui aura été préalablement commandée par la partie amont 2, en l'occurrence la fonction parking du véhicule, lesdites deux parties étant reliées l'une à l'autre par l'intermédiaire d'un câble d'actionnement 4.

La présente invention porte sur une amélioration apportée à la partie amont 2 du système d'actionnement 1.

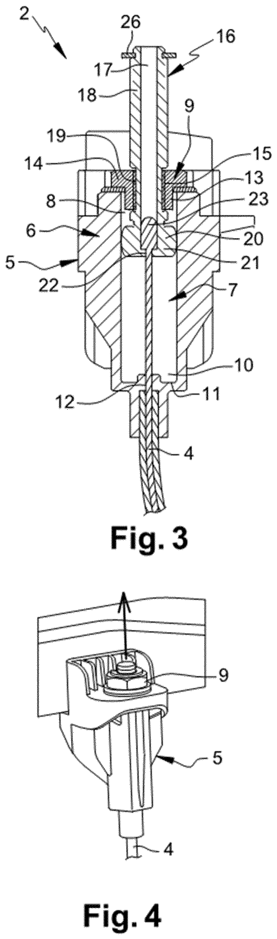

En se référant aux figures 2 et 3, la partie amont 2 de ce système d'actionnement 1 comprend un boitier d'actionnement 5 comportant un corps 6 cylindrique allongé, doté d'un canal interne 7 traversant, s'étendant le long d'un axe longitudinal dudit corps 6. Ce canal interne 7 est cylindrique et présente :
- une première extrémité 8 sur laquelle est monté en rotation un écrou d'activation 9, et
- une deuxième extrémité 10 se terminant par une paroi circulaire 11 s'étendant perpendiculairement à l'axe de révolution du canal interne 7, la dite paroi circulaire 11 étant traversée en son centre par une deuxième tubulure 12 traversante, de diamètre réduit par rapport au diamètre de la paroi circulaire 11. Cette deuxième tubulure 12 de diamètre réduit présente un axe de révolution qui est confondu avec celui du canal interne 7 du corps 6 cylindrique allongé.

L'écrou d'activation 9 présente un corps cylindrique 13 et une tête cylindrique élargie 14 prolongeant ledit corps cylindrique 13 en étant centrée sur celui-ci. Le diamètre externe de la tête élargie 14 de l'écrou d'activation 9 est supérieur au diamètre externe du corps 13. L'écrou d'activation 9 comporte un canal interne 15 fileté, traversant à la fois la tête élargie 14 et le corps 13, les deux extrémités de ce canal interne 15 fileté, considérées le long de l'axe de révolution dudit écrou d'activation 9, sont ouvertes et débouchent chacune sur l'extérieur dudit écrou d'activation 9. L'écrou d'activation 9 est monté sur la première extrémité 10 du canal interne 7 du corps 6 cylindrique allongé, de sorte que :
- le corps cylindrique 13 dudit écrou d'activation 9 soit placé à l'intérieur dudit canal interne 7, et
- la tête élargie 14 de cet écrou d'activation 9 vienne en appui contre une paroi annulaire du corps cylindrique 6 du boitier d'actionnement 5, entourant la première extrémité 8 du canal interne.

Une tige allongée 16 est placée dans le canal interne 7 du corps cylindrique 6 du boitier d'actionnement 5. Cette tige 16 est creuse et comporte sur toute sa longueur un canal interne 17 cylindrique, de diamètre constant. Elle se présente sous la forme de trois tronçons distincts :
- un premier tronçon cylindrique 18 possédant un diamètre externe constant, et dont une surface externe est filetée. Les dimensions de ce premier tronçon 18 sont compatibles avec les dimensions du canal interne 15 fileté de l'écrou d'activation 9, de manière que ledit premier tronçon 18 puisse être vissé dans ledit canal interne 15,
- un deuxième tronçon cylindrique 19 possédant une surface externe lisse, et un diamètre externe qui est inférieur au diamètre externe du premier tronçon cylindrique18,
- un troisième tronçon cylindrique 20 comportant un bourrelet évasé 21 dont le diamètre externe est supérieur à celui du premier tronçon cylindrique 18. Ce troisième tronçon cylindrique 20 se termine par une première tubulure 22 prolongeant le canal interne 17 de la tige 16, le diamètre de ladite première tubulure 22 étant inférieur à celui du canal interne 17 de ladite tige 16. Les trois tronçons 18, 19, 20 sont dans la continuité les uns des autres, le deuxième tronçon 19 étant inséré entre le premier tronçon 18 et le troisième tronçon 20.

Les trois tronçons 18, 19, 20 sont coaxiaux, une extrémité libre du premier tronçon 18 constituant une première extrémité de la tige 16, et le bourrelet évasé 21 du troisième tronçon cylindrique 20 constituant une deuxième extrémité de ladite tige 16. La tige 16 comporte également une rondelle 26 d'extrémité élargie, qui est solidarisée à la première extrémité de ladite tige 16 et qui déborde radialement de celle-ci.

Le diamètre externe du bourrelet 21 du troisième tronçon cylindrique 20 est légèrement inférieur au diamètre du canal interne 7 du corps cylindrique 6 du boitier d'extrémité 5. De cette manière, le bourrelet 21 peut être inséré dans le canal interne 7 du corps cylindrique 6 puis coulisser à l'intérieur de celui-ci en demeurant au contact de la paroi délimitant ledit canal interne 7.

Le câble d'actionnement 4 présente un diamètre constant et se termine par une tête élargie 23. Ce câble d'actionnement 4 est relié au boitier d'actionnement 5, au moyen d'une insertion de la tête élargie 23 dans le canal interne 17 de la tige 16, ledit câble d'actionnement passant dans la première tubulure 22 de la tige 16 et dans la deuxième tubulure 12 du corps cylindrique 6 du boitier d'extrémité 5, lesdites deux tubulures 12, 22 étant dans la parfaite continuité l'une de l'autre.

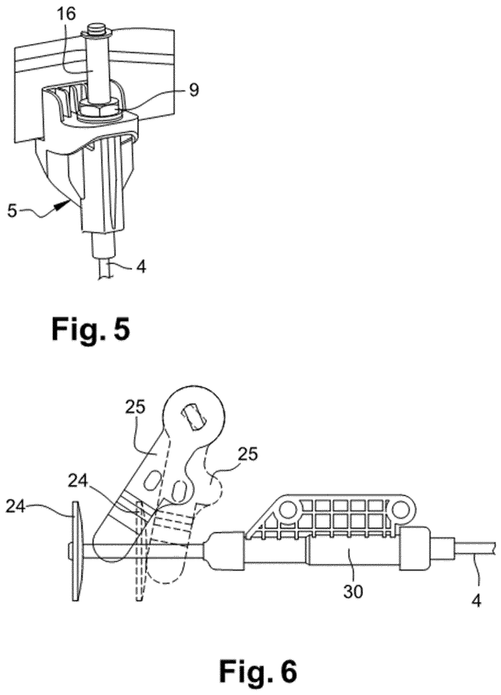

En se référant à la figure 6, la partie aval 3 d'un système d'actionnement 1 selon l'invention comprend une pièce d'actionnement 24 qui est fixée à une extrémité du câble d'actionnement 4, un déplacement dudit câble d'actionnement 4 engendrant un déplacement de la pièce d'actionnement 24 avec la même amplitude Le déplacement de la pièce d'actionnement 24 va provoquer une mise en rotation d'une pièce motrice 25 qui va alors activer ou désactiver la fonction de parking du véhicule en fonction du sens de déplacement du câble d'actionnement 4. Il est à noter que le câble d'actionnement 4 est associé à un élément de rappel précontraint placé dans un étui 30 entourant ledit câble d'actionnement 4. Cet élément de rappel précontraint, qui peut par exemple être un ressort, a tendance a exercer un effort de traction sur le câble d'actionnement 4, dans un sens qui s'oppose au sens de déplacement de la tige 16 passant de la première position à la deuxième position.

En se référant aux figures 2 et 4, la tige 16 qui est placée dans le canal interne 7 du corps cylindrique 6 du boitier d'extrémité 5 peut occuper une première position pour laquelle :
- la première extrémité de la tige 16 dépasse faiblement de l'écrou d'activation 9, de sorte que la tige 16 se retrouve très majoritairement incluse dans le canal interne 7 du corps cylindrique 6 du boitier d'extrémité 5,
- le premier tronçon cylindrique 18 de la tige 16 est vissé dans l'écrou d'activation 9,
- la première tubulure 22 de la tige 16 et la deuxième tubulure 12 du corps cylindrique 6 du boitier d'extrémité 5, sont très proches l'une de l'autre, voire au contact l'une de l'autre.

Pour cette première position, la fonction parking est activée. Pour désactiver la fonction parking depuis cette première position, il faut placer la tige 16 dans une deuxième position, comme cela est illustré aux figures 3 et 5.

Pour atteindre cette deuxième position depuis la première position, il faut -mettre en rotation l'écrou d'activation 9 autour de son axe de révolution, dans le sens des aiguilles d'une montre. De cette manière, ledit écrou 9 pivote à l'intérieur du canal interne 7 du corps cylindrique 6 du boitier d'actionnement 5. Cette mise en rotation de l'écrou d'activation 9 engendre une translation vers le haut de la tige 16, en raison de la présence du premier tronçon 18 fileté de ladite tige 16 dans ledit le canal interne fileté 15 de l'écrou d'activation 9. Cette translation vers le haut de la tige 16 entraine un déplacement simultané du fil d'actionnement 4 dans le même sens et avec la même amplitude, en raison de l'insertion de la tête élargie 23 dudit câble 4 dans le canal interne 17 de la tige 16. Cette mise en rotation de l'écrou d'activation 9 se poursuit jusqu'à ce que le deuxième tronçon 19 de la tige 16 soit entièrement parvenu dans ledit écrou d'activation 9, comme cela est illustré à la figure 3. Comme ce deuxième tronçon 19 possède une surface externe lisse, une poursuite de la mise en rotation de l'écrou d'activation 9 dans le même sens, n'a plus aucun effet sur le déplacement de la tige 16 qui n'est plus engrené dans ledit écrou d'activation 9. La présence de ce deuxième tronçon lisse 19 permet de marquer la deuxième position de la tige 16 et d'empêcher qu'un utilisateur ne poursuive la mise en rotation de l'écrou d'activation 9 en forçant, ce qui risquerait d'endommager le système d'actionnement 1. La câble d'actionnement a continué de se déplacer jusqu'à ce que la tige 16 atteigne la deuxième position. Lorsque la tige 16 a atteint la deuxième position, la fonction parking du véhicule est désactivée.

Pour faire passer la tige 16 de la deuxième position à la première position, il suffit de tourner l'écrou d'activation 9 dans le sens inverse des aiguilles d'une montre. En effet, malgré la présence du deuxième tronçon lisse 19 de la tige 16 dans l'écrou d'activation 9, le câble d'actionnement 4 qui est associé à l'élément de rappel précontraint, va exercer un effort de traction sur la tige 16 qui va aussitôt pouvoir interagir avec l'écrou d'activation 9 en se rabaissant.

## Revendications

1. Système d'actionnement (1) comprenant un boitier d'extrémité (5) possédant un canal interne (7) traversant, un écrou d'activation (9) comportant un canal interne fileté (15) et une tige allongée (16) comprenant une surface externe filetée (18), l'écrou d'activation (9) étant placé à une première extrémité (8) du canal interne traversant (7) du boitier d'extrémité (5) de sorte que l'axe de révolution de l'écrou d'activation (9) et l'axe de révolution du canal interne (7) traversant soient confondus, la tige allongée (16) passant dans l'écrou d'activation (9) et s'étendant dans le canal interne (7) du boitier d'extrémité (5), la tige (16) présentant une première extrémité et une deuxième extrémité à laquelle est fixé un câble d'actionnement (4), et une mise en rotation de l'écrou d'activation (9) entraine un déplacement en translation de la tige (16) le long du canal interne (7) traversant permettant à ladite tige (16) de passer :
- d'une première position pour laquelle la première extrémité émerge faiblement de l'écrou d'activation (9) vers l'extérieur du boitier d'extrémité (5), et la deuxième extrémité est positionnée à une profondeur importante dans le canal interne (7) dudit boitier d'extrémité (5),
- à une deuxième position pour laquelle le première extrémité émerge de façon plus importante de l'écrou d'activation (9) que dans la première position, vers l'extérieur du boitier d'extrémité (5), et la deuxième extrémité est positionnée à une plus faible profondeur dans le canal interne (7) du boitier d'extrémité (9) que dans la première position,
**caractérisé en ce que** la tige (16) présente un tronçon (19) dont la surface externe est lisse sans aucun filetage, et **en ce que** ledit tronçon(19) est placé le long de la tige (16) de manière que la deuxième position de ladite tige (16) est atteinte lorsque ledit tronçon (19) est entièrement parvenu dans le canal interne fileté (15) de l'écrou d'activation (9).

2. Système d'actionnement selon la revendication 1, **caractérisé en ce que** la longueur du tronçon lisse (19) de la tige (16) est supérieure ou égale à la longueur du canal interne fileté (15) de l'écrou d'activation (9)

3. Système d'actionnement selon l'une quelconque des revendications 1 ou 2, **caractérisé en ce que** la tige (16), le tronçon lisse (19) et le canal interne fileté (15) de l'écrou d'activation (9) sont de forme cylindrique, et **en ce que** le diamètre externe du tronçon lisse (19) de la tige (16) est inférieur au diamètre du canal interne fileté (15) de l'écrou d'activation (9) de sorte qu'il se crée un jeu entre eux lorsque le tronçon (19) lisse est complètement parvenu dans ledit canal interne fileté (15).

4. Système d'actionnement selon l'une quelconque des revendications 1 à 3, **caractérisé en ce que** la tige (16) est creuse et la deuxième extrémité de ladite tige (16) présente une première tubulure (22) de dimension réduite reliant un espace interne (17) de ladite tige (16) à un espace extérieur (7) de celle-ci, et **en ce qu'**une première extrémité du câble d'actionnement (4) présente une tête élargie (23) qui est plus large que ladite première tubulure (22), ledit câble d'actionnement (4) étant fixé à la deuxième extrémité de la tige (16) au moyen d'une insertion de la tête élargie (23) dudit câble (4) dans l'espace interne (17) de ladite tige (16) et d'un passage dudit câble (4) dans ladite première tubulure (22).

5. Système d'actionnement selon la revendication 4, **caractérisé en ce qu'**une deuxième extrémité (10) du canal interne (7) du boitier d'extrémité (5) présente une deuxième tubulure (12) ayant le même diamètre que celui de la première tubulure (22) et se trouvant dans la parfaite continuité de ladite première tubulure (22), et **en ce que** le câble (4) émerge du boitier d'extrémité (5) en passant par ladite deuxième tubulure (12).

6. Système d'actionnement selon l'une quelconque des revendications 4 ou 5, **caractérisé en ce qu'**une deuxième extrémité du câble d'actionnement (4) qui est extérieure au boitier d'extrémité (5), est associée à un élément de rappel précontraint, si bien que la tête élargie (23) dudit câble (4) demeure en butée contre une paroi interne délimitant la deuxième extrémité de la tige creuse (16).

7. Système d'actionnement selon la revendication 4, **caractérisé en ce que** la deuxième extrémité du câble d'actionnement (4) est reliée à une pièce d'actionnement (24) qui est mise en mouvement par le câble d'actionnement (4) qui se déplace conjointement avec la tige (16) dans le boitier d'extrémité (5).

8. Système d'actionnement selon l'une quelconque des revendications 1 à 7, **caractérisé en ce que** la première extrémité de la tige (16) dispose d'une rondelle élargie (26) qui est au contact de l'écrou d'activation (9) lorsque la tige (16) est dans la première position.

9. Système d'actionnement selon l'une quelconque des revendications 1 à 8, **caractérisé en ce que** le boitier d'extrémité (5) comporte des moyens de fixation destinés à la fixation dudit boitier d'extrémité (5) à un élément de structure extérieur.

10. Véhicule comprenant un système d'actionnement selon l'une quelconque des revendications 1 à 9, **caractérisé en ce que** ledit système d'actionnement (1) sert à piloter la fonction parking du véhicule, de sorte que dans la première position, la tige (16) active la fonction parking du véhicule et dans la deuxième position elle désactive cette fonction.

## Patentansprüche

1. Betätigungssystem (1), beinhaltend ein Endgehäuse (5), das einen durchgehenden Innenkanal (7) besitzt, eine Aktivierungsmutter (9), die einen mit Gewinde versehenen Innenkanal (15) umfasst, und einen länglichen Schaft (16), der eine mit Gewinde versehene Außenoberfläche (18) beinhaltet, wobei die Aktivierungsmutter (9) an einem ersten Ende (8) des durchgehenden Innenkanals (7) des Endgehäuses (5) platziert ist, sodass die Rotationsachse der Aktivierungsmutter (9) und die Rotationsachse des durchgehenden Innenkanals (7) zusammenfallen, wobei der längliche Schaft (16) in die Aktivierungsmutter (9) hineingeht und sich in dem Innenkanal (7) des Endgehäuses (5) erstreckt, wobei der Schaft (16) ein erstes Ende und ein zweites Ende, an dem ein Betätigungszug (4) befestigt ist, aufweist und wobei das Versetzen der Aktivierungsmutter (9) in Drehung eine translatorische Bewegung des Schafts (16) entlang des durchgehenden Innenkanals (7) bewirkt, wodurch dem Schaft (16) der Übergang gestattet wird:
- von einer ersten Position, in der das erste Ende geringfügig zur Außenseite des Endgehäuses (5) aus der Aktivierungsmutter (9) hervorragt und das zweite Ende in einer beträchtlichen Tiefe in dem Innenkanal (7) des Endgehäuses (5) positioniert ist,
- in eine zweite Position, in der das erste Ende weiter zur Außenseite des Endgehäuses (5) aus der Aktivierungsmutter (9) hervorragt als in der ersten Position und das zweite Ende in einer geringeren Tiefe in dem Innenkanal (7) des Endgehäuses (9) positioniert ist als in der ersten Position,
**dadurch gekennzeichnet, dass** der Schaft (16) einen Abschnitt (19) aufweist, dessen Außenoberfläche glatt und nicht mit Gewinde versehen ist, und dass der Abschnitt (19) so entlang des Schafts (16) platziert ist, dass die zweite Position des Schafts (16) erreicht ist, wenn der Abschnitt (19) vollständig in den mit Gewinde versehenen Innenkanal (15) der Aktivierungsmutter (9) eingetreten ist.

2. Betätigungssystem nach Anspruch 1, **dadurch gekennzeichnet, dass** die Länge des glatten Abschnitts (19) des Schafts (16) größer als oder gleich der Länge des mit Gewinde versehenen Innenkanals (15) der Aktivierungsmutter (9) ist.

3. Betätigungssystem nach einem der Ansprüche 1 oder 2, **dadurch gekennzeichnet, dass** der Schaft (16), der glatte Abschnitt (19) und der mit Gewinde versehene Innenkanal (15) der Aktivierungsmutter (9) eine zylindrische Form aufweisen und dass der Außendurchmesser des glatten Abschnitts (19) des Schafts (16) kleiner als der Durchmesser des mit Gewinde versehenen Innenkanals (15) der Aktivierungsmutter (9) ist, sodass zwischen ihnen ein Spiel entsteht, wenn der glatte Abschnitt (19) komplett in den mit Gewinde versehenen Innenkanal (15) eingetreten ist.

4. Betätigungssystem nach einem der Ansprüche 1 bis 3, **dadurch gekennzeichnet, dass** der Schaft (16) hohl ist und das zweite Ende des Schafts (16) einen ersten Stutzen (22) mit kleinerer Abmessung aufweist, der einen Innenbereich (17) des Schafts (16) mit einem Außenbereich (7) desselben verbindet, und dass ein erstes Ende des Betätigungszugs (4) einen vergrößerten Kopf (23) aufweist, der breiter als der erste Stutzen (22) ist, wobei der Betätigungszug (4) an dem zweiten Ende des Schafts (16) befestigt wird, indem der vergrößerte Kopf (23) des Zugs (4) in den Innenbereich (17) des Schafts (16) eingeführt wird und der Zug (4) durch den ersten Stutzen (22) hindurchgeht.

5. Betätigungssystem nach Anspruch 4, **dadurch gekennzeichnet, dass** ein zweites Ende (10) des Innenkanals (7) des Endgehäuses (5) einen zweiten Stutzen (12) aufweist, der den gleichen Durchmesser wie der erste Stutzen (22) aufweist und sich in der exakten Verlängerung des ersten Stutzens (22) befindet, und dass der Zug (4) aus dem Endgehäuse (5) austritt, indem er durch den zweiten Stutzen (12) hindurchgeht.

6. Betätigungssystem nach einem der Ansprüche 4 oder 5, **dadurch gekennzeichnet, dass** ein zweites Ende des Betätigungszugs (4), das sich außerhalb des Endgehäuses (5) befindet, mit einem vorgespannten Rückstellelement assoziiert ist, sodass der vergrößerte Kopf (23) des Zugs (4) an einer Innenwand, die das zweite Ende des hohlen Schafts (16) begrenzt, in Anlage gehalten wird.

7. Betätigungssystem nach Anspruch 4, **dadurch gekennzeichnet, dass** das zweite Ende des Betätigungszugs (4) mit einem Betätigungsteil (24) verbunden ist, das durch den Betätigungszug (4), der sich zusammen mit dem Schaft (16) in dem Endgehäuse (5) bewegt, in Bewegung versetzt wird.

8. Betätigungssystem nach einem der Ansprüche 1 bis 7, **dadurch gekennzeichnet, dass** das erste Ende des Schafts (16) über eine vergrößerte Scheibe (26) verfügt, die mit der Aktivierungsmutter (9) in Kontakt ist, wenn sich der Schaft (16) in der ersten Position befindet.

9. Betätigungssystem nach einem der Ansprüche 1 bis 8, **dadurch gekennzeichnet, dass** das Endgehäuse (5) Befestigungsmittel umfasst, die zur Befestigung des Endgehäuses (5) an einem äußeren Strukturelement bestimmt sind.

10. Fahrzeug, das ein Betätigungssystem nach einem der Ansprüche 1 bis 9 beinhaltet, **dadurch gekennzeichnet, dass** das Betätigungssystem (1) dazu dient, die Feststellbremsfunktion des Fahrzeugs zu steuern, sodass der Schaft (16) die Feststellbremsfunktion des Fahrzeugs in der ersten Position aktiviert und diese Funktion in der zweiten Position deaktiviert.

## Claims

1. Actuating system (1) comprising an end housing (5) having an internal through-channel (7), an activation nut (9) comprising a threaded internal channel (15), and an elongate rod (16) comprising a threaded external surface (18), the activation nut (9) being placed at a first end (8) of the internal through-channel (7) of the end housing (5) so that the axis of revolution of the activation nut (9) and the axis of revolution of the internal through-channel (7) coincide, the elongate rod (16) passing through the activation nut (9) and extending in the internal channel (7) of the end housing (5), the rod (16) having a first end and a second end to which an actuating cable (4) is fastened, and a rotation of the activation nut (9) causes a translational movement of the rod (16) along the internal through-channel (7) allowing said rod (16) to pass:
- from a first position in which the first end emerges slightly from the activation nut (9) towards the outside of the end housing (5), and the second end is positioned at a considerable depth in the internal channel (7) of said end housing (5),
- to a second position in which the first end emerges more significantly from the activation nut (9) than in the first position, towards the outside of the end housing (5), and the second end is positioned at a shallower depth in the internal channel (7) of the end housing (9) than in the first position,
**characterized in that** the rod (16) has a section (19) whose external surface is smooth without any thread, and **in that** said section (19) is placed along the rod (16) in such a way that the second position of said rod (16) is reached when said section (19) has fully entered the threaded internal channel (15) of the activation nut (9).

2. Actuating system according to Claim 1, **characterized in that** the length of the smooth section (19) of the rod (16) is greater than or equal to the length of the threaded internal channel (15) of the activation nut (9).

3. Actuating system according to either one of Claims 1 and 2, **characterized in that** the rod (16), the smooth section (19) and the threaded internal channel (15) of the activation nut (9) are of cylindrical shape, and **in that** the external diameter of the smooth section (19) of the rod (16) is less than the diameter of the threaded internal channel (15) of the activation nut (9) so that a clearance is created between them when the smooth section (19) has completely entered said threaded internal channel (15).

4. Actuating system according to any one of Claims 1 to 3, **characterized in that** the rod (16) is hollow and the second end of said rod (16) has a first tube (22) of reduced size connecting an internal space (17) of said rod (16) to an outer space (7) thereof, and **in that** a first end of the actuating cable (4) has an enlarged head (23) which is wider than said first tube (22), said actuating cable (4) being fastened to the second end of the rod (16) by inserting the enlarged head (23) of said cable (4) into the internal space (17) of said rod (16) and by passing said cable (4) into said first tube (22).

5. Actuating system according to Claim 4, **characterized in that** a second end (10) of the internal channel (7) of the end housing (5) has a second tube (12) having the same diameter as that of the first tube (22) and being in perfect continuity with said first tube (22), and **in that** the cable (4) emerges from the end housing (5) by passing through said second tube (12).

6. Actuating system according to either one of Claims 4 and 5, **characterized in that** a second end of the actuating cable (4), which is outside the end housing (5), is associated with a preloaded return element, such that the enlarged head (23) of said cable (4) remains in abutment against an internal wall delimiting the second end of the hollow rod (16).

7. Actuating system according to Claim 4, **characterized in that** the second end of the actuating cable (4) is connected to an actuating part (24) which is moved by the actuating cable (4) which moves together with the rod (16) in the end housing (5).

8. Actuating system according to any one of Claims 1 to 7, **characterized in that** the first end of the rod (16) has an enlarged washer (26) which is in contact with the activation nut (9) when the rod (16) is in the first position.

9. Actuating system according to any one of Claims 1 to 8, **characterized in that** the end housing (5) comprises fastening means intended for fastening said end housing (5) to an outer structural element.

10. Vehicle comprising an actuating system according to any one of Claims 1 to 9, **characterized in that** said actuating system (1) serves to control the parking function of the vehicle, so that, in the first position, the rod (16) activates the parking function of the vehicle and, in the second position, it deactivates this function.
